# EUROPÄISCHE PATENTSCHRIFT

(11) **EP 1 399 306 B1**
(45) Veröffentlichungstag und Bekanntmachung des Hinweises auf die Patenterteilung: **15.08.2007**
(21) Anmeldenummer: 02778889.2
(22) Anmeldetag: 11.06.2002
(51) Int. Cl.: B28D 5/00, G01N 23/20

(54) **VERFAHREN UND VORRICHTUNG ZUM TRENNEN EINES EINKRISTALLS**
METHOD AND DEVICE FOR CUTTING A SINGLE CRYSTAL
PROCEDE ET DISPOSITIF DE SEPARATION D'UN MONOCRISTAL

(30) Priorität: 13.06.2001 DE 10128630
(43) Veröffentlichungstag der Anmeldung: 24.03.2004
(60) Teilanmeldung: 05010482.7
(73) Patentinhaber: Freiberger Compound Materials GmbH, 09599 Freiberg (DE)
(72) Erfinder: HAMMER, Ralf, 09599 Freiberg (DE); GRUSZYNSKY, Ralf, 09618 Brand-Erbisdorf (DE); KLEINWECHTER, André, 09599 Freiberg (DE); FLADE, Tilo, 09599 Freiberg (DE)
(74) Vertreter: Hofer, Dorothea
(86) Internationale Anmeldenummer: PCT/EP2002/006407
(87) Internationale Veröffentlichungsnummer: WO 2002/100619

(56) Entgegenhaltungen:
- DE-A- 10 052 154
- US-A- 5 768 335
- US-A- 6 145 422
- PATENT ABSTRACTS OF JAPAN vol. 010, no. 047 (M-456), 25. Februar 1986 (1986-02-25) -& JP 60 197361 A (FUJITSU KK), 5. Oktober 1985 (1985-10-05)
- PATENT ABSTRACTS OF JAPAN vol. 1999, no. 08, 30. Juni 1999 (1999-06-30) & JP 11 064252 A (TOSHIBA FA SYST ENG KK), 5. März 1999 (1999-03-05)
- PATENT ABSTRACTS OF JAPAN vol. 015, no. 120 (M-1096), 25. März 1991 (1991-03-25) -& JP 03 010760 A (NIPPON SPINDLE MFG CO LTD;OTHERS: 01), 18. Januar 1991 (1991-01-18)
- PATENT ABSTRACTS OF JAPAN vol. 1998, no. 12, 31. Oktober 1998 (1998-10-31) -& JP 10 193338 A (SUMITOMO METAL MINING CO LTD), 28. Juli 1998 (1998-07-28)

## Beschreibung

Die Erfindung betrifft ein Verfahren zum Trennen eines Einkristalls in einer Trennmaschine, sowie eine Vorrichtung zur Durchführung des Verfahrens.

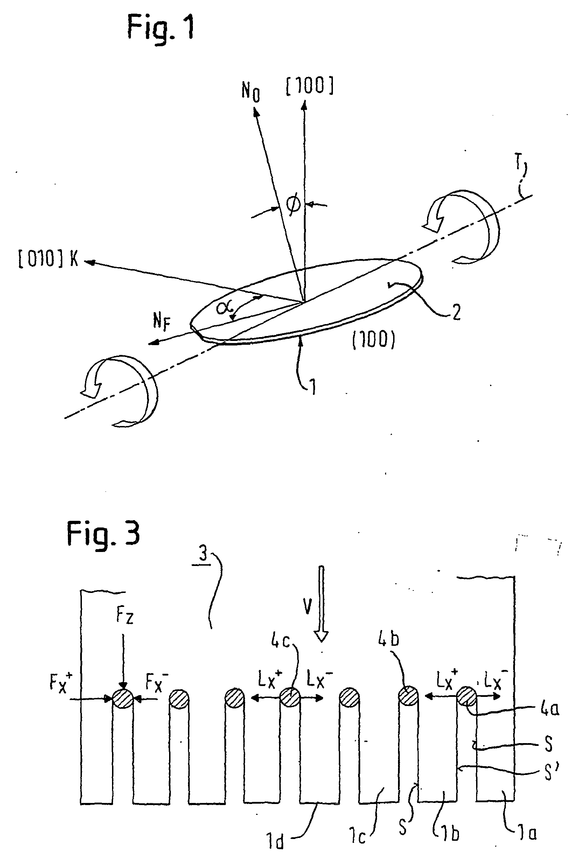

Für bestimmte Anwendungen werden Halbleiterwafer mit einer sogenannten Fehlorientierung benötigt. Wie aus Fig. 1 ersichtlich ist, ist bei einem Halbleiterwafer 1 mit Fehlorientierung eine bestimmte kristallografische Ebene, z.B. die (100) Ebene nicht parallel zu der Waferoberfläche 2. Der Fehlorientierungswinkel φ ist in diesem Fall der Winkel, den der Vektor [100], der senkrecht auf der (100) Ebene steht, mit dem Normalenvektor Nₒ, der senkrecht auf der Waferoberfläche 2 steht, einschließt. Wird eine derartige Fehlorientierung benötigt, so wird ein Einkristall, aus dem die Wafer geschnitten werden, um eine in der Trennebene, d.h. der Waferoberfläche 2, liegende Achse T um den vorbestimmten Winkel φ gekippt.

Bei dem bekannten Verfahren des Innenlochsägens wird zum Erzeugen einer derartigen Fehlorientierung die Orientierung des Kristalls, der auf eine Werkstückhalterung aufgeklebt ist, mittels eines Röntgengoniometers durch Messung der Position des Bragg-Reflexes bezüglich der Werkstückhalterung gemessen. Über diese Halterung erfolgt die Aufnahme auf der Innenlochtrennsäge, die über einen horizontal und vertikal verstellbaren Support verfügt, an dem sich die gemessene Orientierung des Kristalls korrigieren oder auf den gewünschten Wert einstellen läßt. Die erste abgetrennte Scheibe wird nochmals auf einem Röntgengoniometer vermessen und der Support gegebenenfalls nachkorrigiert. Ungenauigkeiten in der Orientierung, die beim Einsetzen der Werkstückhalterung in die Innenlochsägevorrichtung entstehen, können somit nur durch erneutes Vermessen und Nachkorrigieren behoben werden.

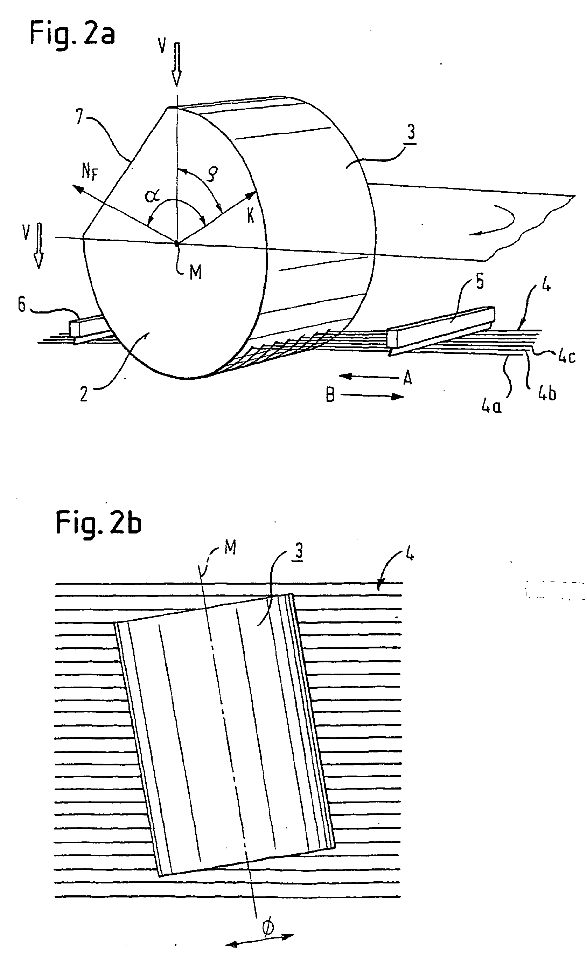

Bei dem bekannten Verfahren des Drahtsägens ist eine derartige Korrektur durch Nachmessen und erneutes Orientieren nicht möglich, da alle Wafer aus einem Einkristall gleichzeitig geschnitten werden. Wie aus Fig. 2a ersichtlich ist, ist beim Drahtsägen ein Einkristall 3 in einer in Fig. 2a nicht dargestellten Halterung gehalten, die über einen Antrieb einer Vorschubeinheit auf das Drahtfeld 4 einer Drahtsäge mit einer Vorschubgeschwindigkeit v hin bewegbar und wieder in die Ausgangsstellung zurückbewegbar ist. Die Drahtsäge besteht aus einer Vielzahl von parallel verlaufenden Drähten 4a, 4b, 4c, die über in Fig.2 nicht dargestellte Rollen gespannt sind und in Ebenen senkrecht zur Mittenlängsachse M des Einkristalls 3 in den in Fig. 2a durch die Pfeile A und B gezeigten Richtungen bewegbar sind. Die Drahtsägevorrichtung umfaßt ferner ein Vorrichtungen 5 und 6 zum Aufbringen einer Siliciumcarbidkörner enthaltenden Paste auf die Drähte 4a, 4b, 4c auf jeder Seite des Einkristalls 3. Bei Drahtsägen mit galvanisch gebundenen Schneidkörnern ist ferner eine Vorrichtung zum Aufbringen eines Kühl-Schmiermittels vorgesehen.

Es sind Drahtsägen mit einer Orientierungseinheit bekannt, die zum Einstellen der gewünschten Fehlorientierung, wie in Fig. 2b ersichtlich ist, ausschließlich eine Verstellung in einer Ebene parallel zur Ebene des Drahtfeldes 4 zuläßt. Dazu wird der Kristall außerhalb der Drahtsäge auf einem Röntgengoniometer vermessen und so auf eine Werkstückunterlage geklebt, daß die einzustellende Fehlorientierung in der horizontalen Ebene, also der in Fig. 1 gezeigte Winkel φ in einer Ebene parallel zum Drahtfeld 4 liegt. Die Meßwerte des Röntgengoniometers beziehen sich dabei auf eine Anschlagfläche der Werkstückunterlage, die dann an eine Bezugsfläche auf der Drahtsäge angelegt wird. Danach wird die gewünschte Orientierung horizontal eingestellt. Bei diesem Verfahren werden jedoch Fehler durch Verunreinigungen der Anschlag- bzw. Bezugsflächen sowie Klebefehler, die beim Kleben des Einkristalls auf die Werkstückunterlage auftreten, nicht erfaßt, da die Orientierungsmessung außerhalb der Maschine erfolgt. Ferner muß der Einkristall immer so gedreht werden, daß die einzustellende Fehlorientierung in der horizontalen Ebene parallel zu dem Drahtfeld 4 liegt. Dadurch richtet sich die Bearbeitungsrichtung nach der geforderten Fehlorientierung und kann sich deshalb von Einkristall zu Einkristall ändern.

Aus der US 5,904,136 ist es bekannt, außerhalb einer Drahtsägevorrichtung den erforderlichen Kippwinkel zum Einstellen der Fehlorientierung in einer Kippvorrichtung vorzunehmen, wobei die Kristallorientierung mittels einer Röntgeneinrichtung bestimmt wird und anschließend der Kristall in der Kippvorrichtung in horizontaler und vertikaler Richtung relativ zu dem Drahtfeld gekippt wird. Eventuelle Fehler beim Einsetzen der Kippvorrichtung mitsamt dem Kristall in die Drahtsägevorrichtung können somit jedoch ebenfalls nicht behoben werden.

Aus der JP 10-193338 ist ein Verfahren zum Trennen eines Einkristalls nach dem Oberbegriff des Anspruchs 1 bekannt.

Aus der US 5,768,335 ist eine Vorrichtung zur Bestimmung der Orientierung einer kristallografischen Ebene relativ zu einer Kristalloberfläche bekannt. Bei einem dieser Vorrichtung entsprechenden aus der US 5,768,335 bekannten Verfahren zur Bestimmung der Orientierung einer kristallografischen Ebene relativ zu einer Kristalloberfläche wird ein Röntgenstrahl und ein Lichtstrahl entlang des gleichen Pfads auf die Oberfläche eines Wafers gestrahlt. Der Winkel zwischen dem durch Braggreflexion an einer kristallografischen Ebenen reflektierten Röntgenstrahl und dem an der Kristalloberfläche reflektierten Lichtstrahl wird unmittelbar durch die relative Winkelstellung von zwei Detektoren gemessen.

JP-A-60197361 offenbart eine Vorrichtung gemäß Oberbegriff des Anspruchs 3.

Es ist Aufgabe der Erfindung, ein Verfahren zum Trennen eines Einkristalls in einer Trennmaschine bereitzustellen, mit dem es möglich ist, eine präzise Trennung durchzuführen und gleichzeitig die Ausbeute an Wafern beim Trennen des Einkristalls zu erhöhen.

Die Aufgabe wird gelöst durch ein Verfahren gemäß dem Patentanspruch 1 und eine Vorrichtung gemäß dem Patentanspruch 3.

Weiterbildungen der Erfindung sind in den Unteransprüchen angegeben.

Das Verfahren und die Vorrichtung haben den Vorteil, daß die Qualität der Wafer erhöht wird und daß beim Trennen höhere Vorschubgeschwindigkeiten ermöglicht werden. Durch die verbesserte Qualität der erzeugten Wafer können sonst übliche Nachbearbeitungsschritte weitgehend entfallen. Ferner kann die Orientierungsgenauigkeit erhöht werden.

Es folgt die Beschreibung eines Ausführungsbeispieles anhand der Figuren. Von den Figuren zeigen:
- Fig. 1: eine schematische Darstellung eines Wafers;
- Fig. 2a: eine schematische Darstellung einer Drahtsägevorrichtung mit einem zu trennenden Einkristall;
- Fig. 2b: eine schematische Darstellung der Einstellung der Fehlorientierung in einer Drahtsägevorrichtung gemäß dem Stand der Technik;
- Fig. 3: eine schematische Darstellung der beim Drahtsägen auftretenden Kräfte;
- Fig. 4a bis 4d: eine zweidimensionale grafische Darstellung von Warp und Bow von drahtgesägten Wafern in Abhängigkeit von der Bearbeitungsrichtung bei zwei verschiedenen Vorschubwerten;
- Fig. 5a: eine schematische Darstellung der Vorrichtung zur erfindungsgemäßen Bestimmung der Orientierung einer -kristallografischen Ebene relativ zu einer Kristalloberfläche;
- Fig. 5b: eine Ansicht eines in eine Sägehalterung eingesetzten Einkristalls in Richtung einer der Stirnflächen;
- Fig. 6: eine schematische Darstellung einer Orientierungsvorrichtung in einer Drahtsägevorrichtung; und
- Fig. 7: eine schematische Darstellung eines Details von Fig. 6.

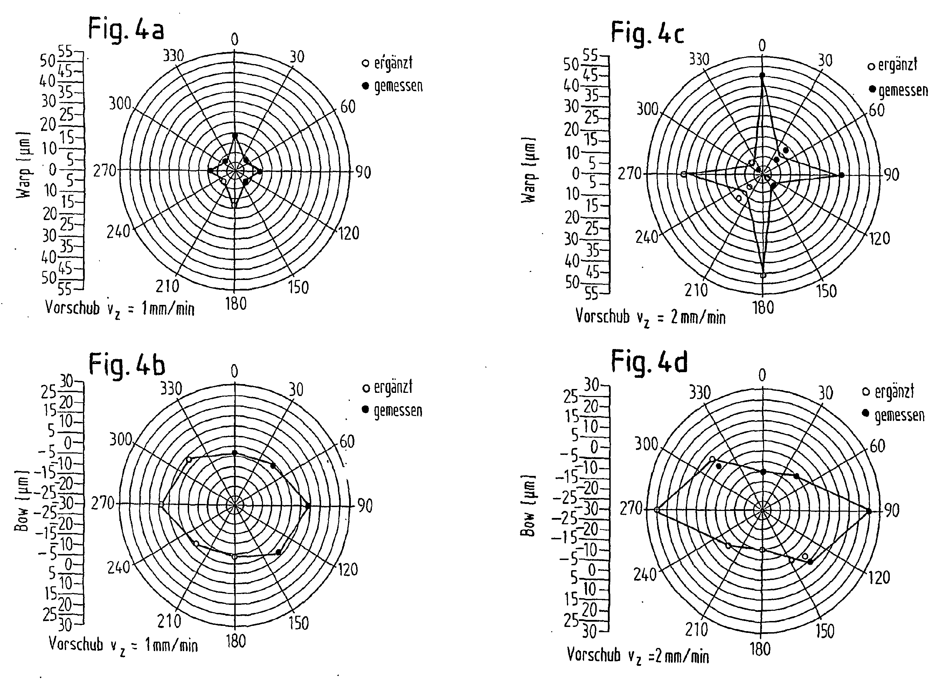

Zum besseren Verständnis werden nachfolgend zuerst die beim Drahtsägen auf den Wafer wirkenden Kräfte anhand der Figuren 1 bis 4 beschrieben. Wie aus Fig. 3 ersichtlich ist, dringen beim Drahtsägen die Drähte 4a, 4b, 4c in den Einkristall 3 ein zum Abtrennen von Scheiben 1a, 1b, 1c etc., die die Wafer bilden. Die Diamantkörner der Drähte erzeugen beim Trennvorgang nach dem Erreichen einer kritischen Eindringtiefe in den Einkristall 3 Mikrorisse, die durch gegenseitige Vernetzung zum Materialabtrag führen. Diese kritische Eindringtiefe hängt von der Orientierung einer in der Waferoberfläche 2 liegenden bestimmten kristallografischen Richtung K, beispielsweise der [010] Richtung, relativ zu der Vorschubrichtung V ab, was nachfolgend erklärt wird.

Wie aus den Figuren 1 und 2a ersichtlich ist, weist der Einkristall 3 ein Orientierungsmerkmal in Form eines ebenen Außenflächenabschnittes 7 auf, den sogenannten Flat, der derart nach dem Züchten des Einkristalls 1 in definierter Weise angebracht worden ist, daß ein Winkel α, den die bestimmte kristallografische Richtung K mit der Normalen N_{F} auf den ebenen Außenflächenabschnitt in der Waferoberfläche 2 bekannt ist. Da der Winkel α bekannt ist, ist somit auch ein Winkel ρ zwischen der bestimmten kristallografischen Richtung K und der Vorschubrichtung V des Einkristalls in einer Ebene senkrecht zur Mittenlängsachse M des Einkristalls und somit in der Trennebene bekannt. Es ist anzumerken, daß anstelle des Flats auch ein Notch genannter Einschnitt an der Außenseite des Einkristalls vorgesehen sein kann. Entscheidend ist lediglich ein äußeres Merkmal, dessen Anordnung zur bestimmten kristallografischen Richtung K bekannt ist.

Wie aus Fig: 3 ersichtlich ist, sind beim Eindringen der Drähte 4a, 4b, 4c etc. in den Einkristall die auf jeden Draht wirkenden Kräfte Fₓ⁻ bzw. Fₓ⁺ aufgrund unterschiedlicher kritischer Lasten Lₓ⁺ bzw. Lₓ⁻ auf der Vorder- und Rückseite S bzw. S' eines Wafers 1a, 1b, 1c etc. unterschiedlich, so daß das auftretende Ungleichgewicht der Kräfte zu einer Drift eines Drahtes führt, bis die rücktreibende Kraft des gespannten Drahtes das Kräftegleichgewicht wiederhergestellt hat. Die kritischen Lasten sind physikalisch äquivalent den kritischen Eindringtiefen. Die Figuren 4a bis 4d zeigen jeweils den Warp bzw. den Bow für einen Wafer in Abhängigkeit von der Winkeleinstellung der bestimmten kristallografischen Richtung K relativ zu der Vorschubrichtung V. Daraus ergibt sich, daß ein kleiner Warp bzw. ein kleiner Betrag des Bowwertes, die angestrebt werden, entweder durch Verringerung der Vorschubgeschwindigkeit v oder, für eine hohe Vorschubgeschwindigkeit, durch Einstellen des Winkels der kristallografischen Richtung K relativ zu der Vorschubrichtung erreicht werden. Bei einer Vorschubgeschwindigkeit von 2 mm/min. werden beispielsweise minimale Bowwerte bei etwa 60°, 150°, 240° und 330° erreicht. Bei diesen Werten ist die resultierende Kraft, die aus der Summe der Zwangskräfte Fₓ⁻ bzw. Fₓ⁺ entsteht, minimal. Die bevorzugten Winkel, bei denen sich die oben beschriebenen Zwangskräfte kompensieren und die Drähte ohne Querauslenkung in den Einkristall eindringen, hängen von dem Material des Einkristalls, bzw. bei Halbleitern auch von der Dotierung, und von anderen Faktoren ab. Sie sind für jeden Einkristallwerkstoff empirisch zu bestimmen.

Die Vorrichtung zur erfindungsgemäßen Orientierung eines Einkristalls in der Trennmaschine, insbesondere in der Drahtsägevorrichtung ermöglicht die Ausnutzung dieses Effekts und gleichzeitig eine präzise Einstellung einer gewünschten Fehlorientierung φ.

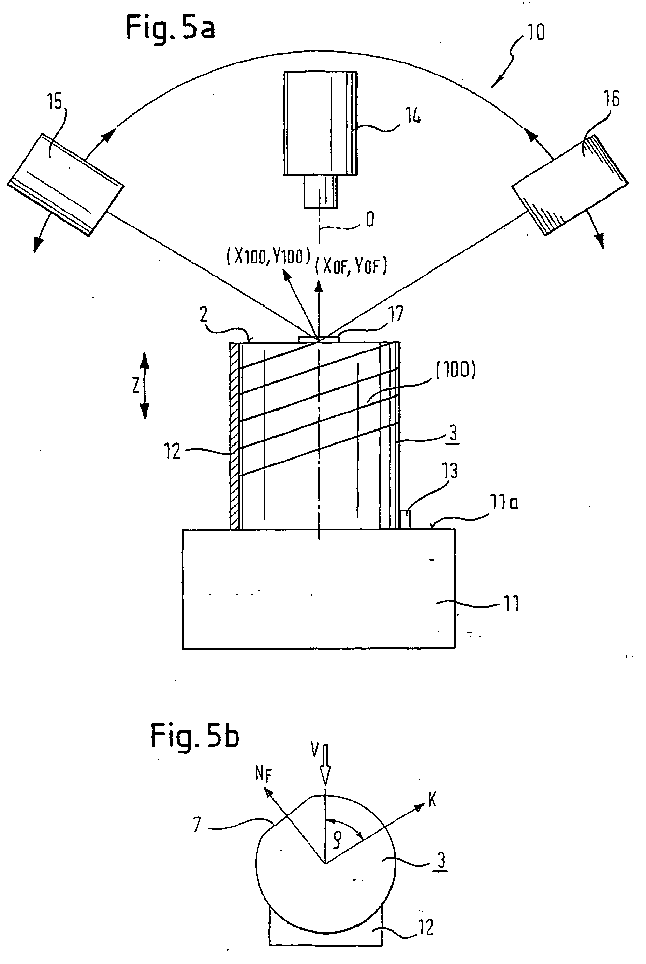

Wie aus Fig. 5a ersichtlich ist, weist die Vorrichtung zum Orientieren eines Einkristalls in einer Trennmaschine eine sich außerhalb der eigentlichen Trennmaschine befindliche Vorrichtung 10 zur Bestimmung des Winkels zwischen einer kristallografischen Ebene, beispielsweise der (100) Ebene und der Kristallstirnfläche 2 auf. Die Vorrichtung 10 weist eine Halterung 11 für den Einkristall 3 mit einer ebenen Oberfläche 11a auf, die bevorzugt als Vakuumchuck ausgebildet ist und bei der der im wesentlichen zylindrische Einkristall an einer Stirnfläche über das Einwirken von Unterdruck gehalten ist. Die azimutale Orientierung des Einkristalls, d.h. die Winkelstellung in der späteren Trennebene ist durch die Orientierung des Flats 7 bzw. anderen äußeren Merkmals in der Vorrichtung 10 definiert. Der Einkristall 3 ist dabei entweder auf einer Sägeunterlage 12 festgeklebt, mit der er später in die Drahtsägevorrichtung einsetzbar ist oder das Kleben erfolgt nach der Messung. Die Winkelstellung des an dem Einkristall 3 vorgesehenen Flats 7 relativ zu der Halterung 11 ist über einen Anschlag 13 so eingestellt, daß der Winkel p, den die bestimmte kristallografische Richtung K relativ zu der Vorschubrichtung in der Trennmaschine aufweist, wie in Fig. 5b ersichtlich ist, einen zuvor empirisch ermittelten Wert wie oben beschrieben, für die minimale Drahtauslenkung und damit maximal mögliche Vorschubgeschwindigkeit aufweist.. Die Halterung 11 ist in vertikaler Richtung verfahrbar. Ferner ist die Halterung 11 mittels eines nicht dargestellten Rotationsmechanismus um ihre zentrale Achse, die parallel zur Mittenlängsachse des Einkristalls verläuft, drehbar. Gegenüberliegend bzw. oberhalb der freien Oberfläche 2 des Einkristalls, die die spätere Oberfläche des ersten abzutrennenden Wafers bildet, ist ein Autokollimationsfernrohr 14 vorgesehen, welches so positioniert ist, daß seine optische Achse O mit der Normalen auf die Oberfläche 11a der Halterung 11 zusammenfällt. Ferner ist ein Röntgengoniometer bestehend aus einer Röntgenröhre 15 und einem zugehörigen Detektor 16 vorgesehen, welches in einem vordefinierten Winkelbereich, beispielsweise von etwa 20° um einen Ursprungspunkt auf der Oberfläche 2 des Einkristalls verfahrbar ist. Ferner ist ein planparalleler optischer Spiegel 17 vorgesehen. Der Spiegel 17 ist mittels eines nicht dargestellten Vakuummechanismus auf der Stirnfläche 2 des Einkristalls befestigbar. Der Spiegel 17 ist ferner an der Stirnfläche 2 des Einkristalls 3 derart befestigbar, daß er auf der optischen Achse des Autokollimationsfernrohrs liegt. Der Meßbereich des Autokollimationsfernrohres beträgt etwa ±1°. Für den Fall, daß der Winkel, den die Kristallstirnfläche 2 relativ zu der ebenen Oberfläche 11a aufweist, diesen Meßbereich überschreitet, ist eine nicht dargestellte optische Keilplatte mit einem definierten Keilwinkel vorgesehen, die eine definierte Strahlablenkung von z.B. 2° bewirkt um die zu vermessende Oberfläche wieder in den Meßbereich zu bringen.

Die Steuerung der Vorrichtung 10 ist so ausgebildet, daß automatisch zuerst eine Winkelmessung der Spiegelorientierung mit dem Autokollimationsfernrohr durchgeführt wird und anschließend eine Messung der gewünschten kristallografischen Ebene, beispielsweise der (100)-Netzebene mittels des Röntgengoniometers. Die Steuerung ist ferner so ausgebildet, daß in einem zweiten Schritt dieselben Messungen nochmals mit einem um 90° um die Mittenlängsachse M gedrehten Einkristall durchrührbar sind.

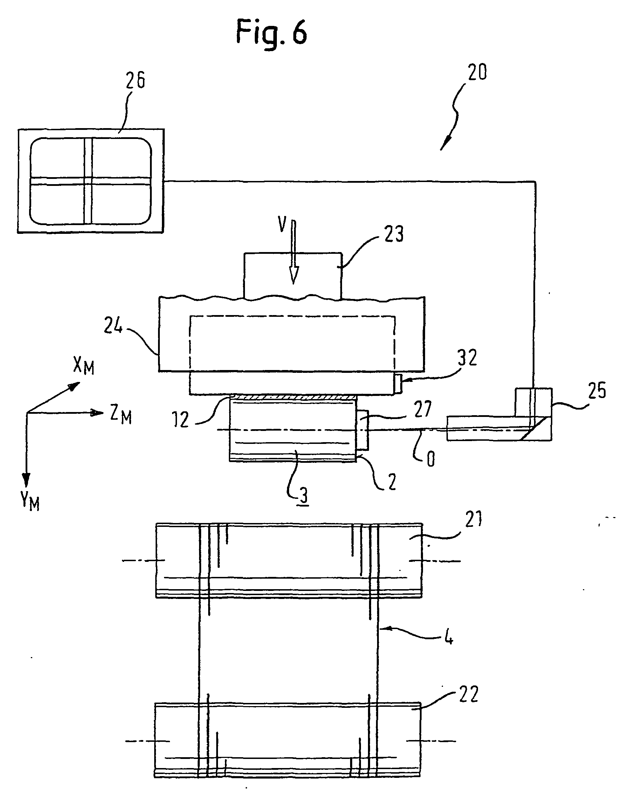

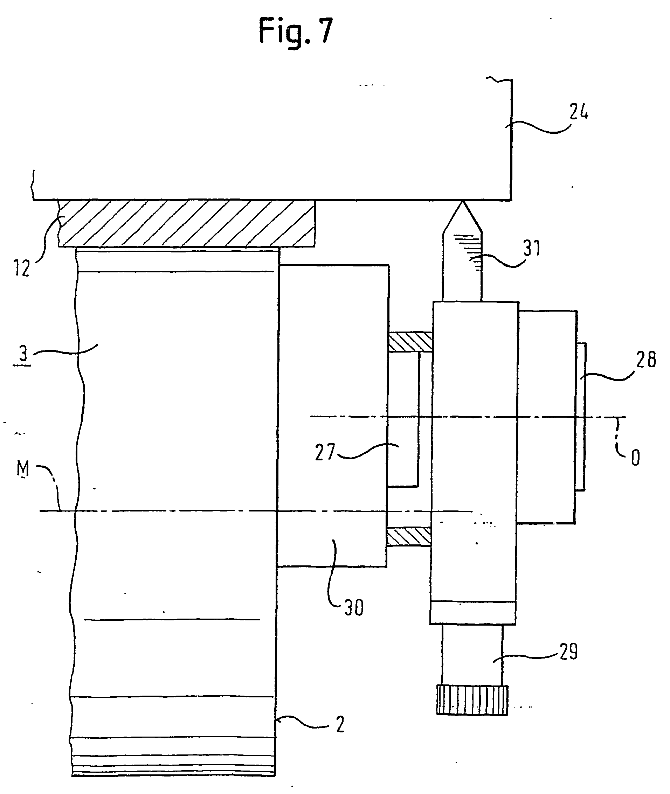

Wie aus den Figuren 6 und 7 ersichtlich ist, weist eine Vorrichtung zum Trennen des Einkristalls, die in diesem Ausführungsbeispiel als Drahtsägevorrichtung 20 ausgebildet ist, Drahtrollen 21 auf, über die das Drahtfeld 4 in horizontaler Richtung geführt ist und darunter befindliche Umlenkrollen 22 zum Rückführen des Drahtfeldes unterhalb der eigentlichen Drahtebene, in der die Trennung erfolgt. Oberhalb des Drahtfeldes 4 ist eine Vorschubeinheit 23 vorgesehen, mit der der Einkristall über die Sägeunterlage 12, die an einer X-Y-Positioniereinheit 24 befestigt ist, in vertikaler Richtung relativ zu dem Drahtfeld mit einer bestimmten Vorschubgeschwindigkeit v bewegbar ist. Die X-Y-Positioniereinheit 24 ist so ausgebildet, daß sie den Einkristall 3 bezogen auf ein maschinenseitiges Koordinatensystem X_{M}, Y_{M}, Z_{M} in einer Richtung parallel zum Drahtfeld 4, die die X_{M}-Richtung ist, und in einer Richtung senkrecht zum Drahtfeld 4, die die Y_{M}-Richtung ist, verstellen kann. Der Schwenkbereich beträgt in X_{M}-Richtung etwa ±5° und in Y_{M}-Richtung etwa ±2°. Es ist ferner ein Autokollimationsfernrohr 25, welches identisch zu dem Autokollimationsfernrohr 14 der Vorrichtung 10 ist, vorgesehen, dessen optische Achse O in einer Ebene parallel zum Drahtfeld 4 liegt. Das Autokollimationsfernrohr 25 ist ferner so angeordnet, daß seine optische Achse bei eingebautem Einkristall etwa in Höhe der Mittenachse des Einkristalls liegt. Zur Auswertung der Winkelmessung des Autokollimationsfernrohres ist eine Auswerteeinheit 26 vorgesehen.

Ferner beinhaltet die Vorrichtung 20 einen Spiegel 27, der identisch zu dem Spiegel 17 der Vorrichtung 10 ist und der mittels eines nicht dargestellten Vakuummechanismus auf der dem Autokollimationsfernrohr 25 zugewandten Stirnfläche 2 des Einkristalls 3 befestigt ist. Ferner ist eine optische Keilplatte 28 in einer drehbaren Fassung 29 zum Erzeugen einer definierten Strahlablenkung von z.B. 2° vorgesehen. Spiegel 27 und Keilplatte 28 sind an einer Halterung 30, die den Vakuummechanismus beinhaltet, befestigt. Es ist ferner ein Anschlag 31 vorgesehen, der einen definierten Abstand des Spiegels 27 mit der Keilplatte 28 von der X-Y-Positioniervorrichtung 24 festlegt.

Zum Justieren der gesamten Vorrichtung ist ferner eine Referenzfläche 32 vorgesehen, die an der Vorschubeinheit 23 gegenüberliegend dem Autokollimationsfernrohr 25 befestigt ist. Die Referenzfläche weist eine hohe Ebenheit und mechanische Stabilität auf und eine leicht zu reinigende Oberfläche, um Verschmutzungen vor der Messung leicht zu beseitigen. Mit Hilfe einer nicht dargestellten Kamera, die direkt auf der Referenzfläche montierbar ist, ist die Referenzfläche in der horizontalen Ebene parallel zum Drahtfeld 4 ausrichtbar.

Der erfindungsgemäße Betrieb der Vorrichtungen 10 und 20 ist wie folgt. Zuerst wird der Einkristall 3, wie in Fig. 5b gezeigt ist, mit dem Flat 7 unter Zuhilfenahme eines nicht dargestellten Anschlages in einer bestimmten Winkelorientierung zu der Sägeunterlage 12 auf diese aufgeklebt. Der Winkel wird dabei so gewählt, daß das Flat 7 in azimutaler Richtung derart orientiert ist, daß die bestimmte kristallografische Richtung K in einem vorgegebenen Winkel ρ zur Vorschubrichtung V steht, bei dem die auf den Draht wirkenden Zwangskräfte sich gegenseitig nahezu aufheben, um somit eine möglichst große Vorschubgeschwindigkeit einstellen zu können. Dann wird, wie in Fig. 5a gezeigt ist, der Einkristall 3 samt der Sägeunterlage 12 auf der Halterung 11 der Vorrichtung zum Bestimmen der Orientierung der kristallografischen Ebene relativ zur Stirnfläche 2 des Einkristalls mittels eines nicht dargestellten Vakuummechanismus eingesetzt. Der vakuummechanismus erlaubt das direkte Aufliegen des Einkristalls 3 auf der Oberfläche 11a der Halterung 11. Anschließend wird die Halterung 11 in eine bestimmte Höhenposition verfahren, so daß sich die Stirnfläche 2 des Einkristalls in der Fokalebene des Röntgengoniometers befindet. Dann wird der Spiegel 17 mittels des Vakuummechanismus auf die Stirnfläche 2 aufgesetzt und fixiert. Anschließend wird mittels des Autokollimationsfernrohres 14 eine Winkelmessung der Spiegeloberfläche vorgenommen, indem eine Abweichung eines reflektierten Fadenkreuzes von dem auf die Spiegeloberfläche projizierten Fadenkreuz bestimmt wird. Da die Oberfläche des Spiegels 17 parallel zur Stirnfläche 2 des Einkristalls 3 orientiert ist und die optische Achse O des Autokollimationsfernrohres 14 senkrecht auf der Oberfläche 11a der Halterung 11, die die Bezugsfläche bildet, steht, läßt sich mit dieser Messung die Winkeleinstellung der Spiegeloberfläche bzw. der Stirnfläche des Einkristalls relativ zur Oberfläche 11a der Halterung 11 bestimmen.

Alternativ wird der Einkristall ohne Sägeunterlage vermessen, wobei die Orientierung des Flat in der Röntgeneinrichtung beispielsweise durch einen Anschlag definiert wird.

Die gewünschte kristallografische Ebene, beispielsweise die (100)-Ebene ist im allgemeinen nicht parallel zur Stirnfläche 2 des Einkristalls 3. Zur Bestimmung der Richtung der kristallografischen Ebene wird der Bragg-Reflex mit dem Röntgengoniometer 15, 16 gemessen, welches hierzu in einem definierten Winkelbereich verfahren wird. Die Röntgenröhre 15 und der Detektor 16 befinden sich hierzu in bekannter Weise in einem festen Winkelabstand zueinander und werden auf einem Kreisbogen in dem vorgegebenen Winkelbereich verfahren. Der Bragg-Reflex gibt den Winkel an, den die kristallografische Ebene mit der Oberfläche 11a der Halterung 11 einschließt. Die röntgengoniometrische Messung wird wiederholt, wobei der Einkristall um 90° gedreht wird. Durch die optische und röntgengoniometrische Messung werden zwei Vektoren erhalten, die Röntgenmeßwerte (x₁₀₀, y₁₀₀) und die optischen Meßwerte (x_{OF}, y_{OF}) bezüglich des Nullpunktes der Orientierungsanlage. Die Differenz der beiden Vektoren ergibt die Orientierung der kristallografischen (1.00)-Ebene zur Kristallstirnfläche 2 unabhängig von allen äußeren Bezugssystemen wie Kitleisten, Druckstücken, Befestigungschucks usw. Nach dieser Messung ist die Orientierung der kristallografischen (100)-Ebene bezüglich der Stirnfläche 2 des Einkristalls bekannt. Daraus ergeben sich Korrekturwerte für die X-Y-Positionierung in der Drahtsäge zur Einstellung einer gewünschten Fehlorientierung.

Anschließend wird auf der Drahtsäge 20 mit Hilfe des identischen Autokollimationsfernrohres 25 und des identischen planparallelen Spiegels 27 die Position der Stirnfläche 2 an dem Kristall gemessen. Die Nullpunktsjustierung der X-Y-Positioniereinheit 24 in dem maschinenseitigen Koordinatensystem X_{M}, Y_{M} erfolgt dabei mittels der Referenzfläche 32. In Y_{M}-Richtung, also in Vorschubrichtung wird die Justierung nur einmal werkseitig, beispielsweise mit einer Meßuhr, vorgenommen. Die Nullpunktsbestimmung in X_{M}-Richtung, d.h. in der Drahtebene erfolgt bei jedem Rollenwechsel des Schneiddrahtes. Hierzu wird die Referenzfläche 32 am Drahtfeld horizontal ausgerichtet mit einer an der Referenzfläche befestigten Kamera die X-Position relativ zu einem Referenzdraht des Drahtfeldes bestimmt.

Zur Justierung des Autokollimationsfernrohres 25 wird die Vorschubeinheit 23 in die Referenzposition verfahren, d.h. die Referenzfläche 32 befindet sich in der optischen Achse des Autokollimationsfernrohres 25, und der Spiegel 27 auf die Referenzfläche aufgesetzt sowie die Position des Autokollimationsfernrohres gemessen. Dann erfolgt eine elektronische Referenzierung anhand der Referenzfläche 32, wobei der Spiegel 27 mittels der Vakuumbefestigungsvorrichtung an die Referenzfläche 32 angesaugt wird. Dann wird der Spiegel 27 entfernt und die Vorschubeinheit in die Belade- bzw. Orientierungsposition gefahren und der Einkristall 3 mit der Sägeunterlage 12 befestigt. Sodann wird der Spiegel 27 an der Kristallstirnfläche 2 befestigt und die Winkeleinstellung der Stirnfläche 2 mit dem Autokollimationsfernrohr 25 gemessen. Dann werden die aus der Messung in der Vorrichtung 10 gewonnenen Korrekturwerte eingegeben und die horizontale und vertikale Positionseinstellung des Einkristalls vorgenommen, so daß die kristallografische Ebene den vorbestimmten Winkel zum Drahtfeld aufweist. Der Spiegel wird entfernt und die Trennung durchgeführt.

Bei dem beschriebenen Verfahren bleibt die azimutale Winkeleinstellung der bestimmten kristallografischen Richtung K erhalten, und es kann mit hohen Vorschubgeschwindigkeiten im Vergleich zum Stand der Technik gearbeitet werden. Die Vorschubgeschwindigkeiten betragen beispielsweise für das Trennen eines 6-Zoll-GaAs Einkristalls etwa das vierfache verglichen mit der herkömmlichen Orientierung, bei der es nicht möglich ist, die azimutale Winkelposition geeignet einzustellen.

In einer Abwandlung wird die gewünschte Fehlorientierung durch Vorsehen der Keilplatte berücksichtigt. In einer weiteren Abwandlung der erfindungsgemäßen Trennvorrichtung ist der Einkristall in der Trennvorrichtung um seine in Fig. 1 gezeigte Achse No, die senkrecht auf der Waferoberfläche steht drehbar, um den optimalen Winkel zu Minimieren der Schnittkräfte einzustellen. Alternativ ist es auch möglich, den optimalen Winkel zum Minimieren der Schnittkräfte über ein Kippen des Drahtfeldes einzustellen. Bevorzugt ist dann eine Meßvorrichtung zu Messen der Auslenkung der Trennvorrichtung beim Schnitt vorgesehen.

Anstelle des Ausschlags in der Meßvorrichtung 10 kann auch ein berührungsloses Abstandsmeßsystem zur Detektion der Orientierung des Flats verwendet werden.

Sämtliche Fehler durch die Klebung oder Verunreinigung von Anschlägen, Bezugsflächen usw. entfallen, da auf der Drahtsägevorrichtung 20 direkt gemessen werden kann. Die beschriebene Vorrichtung und das Verfahren lassen eine hochgenaue direkte Messung auf der Drahtsäge ohne Sicherheitsrisiko zu. Ferner ist die Winkelmessung mit dem Autokollimationsverfahren unabhängig vom Meßabstand, so daß die Anbringung des Autokollimationsfernrohres 25 außerhalb des Trennraumes möglich ist. Zum Trennen kann dann die entsprechende Schutzhaube geschlossen werden. Die X-Y-Positionierungseinheit ermöglicht die vertikale und horizontale Einstellung der Komponenten der Fehlorientierung, so daß die Bearbeitungsrichtung des Kristalls jederzeit frei wählbar ist und als Regelgröße für die Drahtauslenkung genutzt werden kann.

Die Erfindung ist nicht auf eine Drahtsägevorrichtung beschränkt, sondern kann beispielsweise auch in einer Innenlochtrennvorrichtung Verwendung finden.

## Patentansprüche

1. Verfahren zum Trennen eines Einkristalls in einer Trennmaschine in der eine Abtrennung von Wafern von dem Einkristall durch Bewegung des Einkristalls in einer Vorschubrichtung (V) relativ zu einer Trenneinrichtung erfolgt, mit den Schritten:
Messen der Orientierung der äußeren Oberfläche (2) des Einkristalls in der Trennmaschine;
Positionieren des Einkristalls auf der Grundlage der Orientierung der äußeren Oberfläche, und
Durchführen der Trennung,
**dadurch gekennzeichnet, dass**
vor dem Schritt des Messens der Orientierung der äußeren Oberfläche (2) des Einkristalls der Schritt des Bestimmens des Winkels zwischen der kristallografischen Ebene und einer äußeren Oberfläche (2) des Einkristalls außerhalb der Trennmaschine durchgeführt wird, und
der Schritt des Positionierens des Einkristalls derart erfolgt, dass die bestimmte kristallografische Ebene mit der Vorschubrichtung einen vorgegebenen Winkel einschließt,
wobei das Bestimmen des Winkels zwischen der kristallografischen Ebene und einer äußeren Oberfläche (2) des Einkristalls die folgenden Schritte umfasst:
Messen des Winkels, den die Kristalloberfläche (2) mit einer Bezugsachse einschließt mittels eines Autokollimationsverfahrens,
Messen des Winkels der kristallografischen Ebene relativ zu der Bezugsachse mittels Röntgengoniometrie, und
Bilden der Differenz der gemessenen Winkel.

2. Verfahren nach Anspruch 1, **dadurch gekennzeichnet, dass** die Winkelstellung einer bestimmten kristallographischen Richtung (K) des Einkristalls in der Trennebene so eingestellt wird, dass beim Trennen des Einkristalls die auf die Trenneinrichtung wirkenden Kräfte minimiert werden.

3. Vorrichtung zur Durchführung eines Verfahrens nach Anspruch 1 oder 2 mit
einer Trenneinrichtung (4) zum Abtrennen von Wafern von einem im wesentlichen zylindrisch ausgebildeten Einkristall (3) mit einer Mittenlängsachse (M),
einer in der Vorrichtung vorgesehenen Orientierungseinrichtung (24) zum Orientieren des Einkristalls relativ zu der Trenneinrichtung und
einer Vorschubeinrichtung (23) zum Bewegen des Kristalls (3) in einer Vorschubrichtung (V) im wesentlichen senkrecht zu seiner Mittenlängsachse relativ zu der Trenneinrichtung,
wobei die Orientierungseinrichtung (24) so ausgebildet ist, dass der Einkristall (3) um eine durch die Vorschubrichtung definierte Achse und eine Achse, die senkrecht zu der Ebene ist, die durch die Mittenlängsachse (M) und die Vorschubrichtung (V) definiert ist, drehbar ist, und wobei die Trenneinrichtung als Drahtsäge mit einer Mehrzahl von parallelen Drähten (4), die eine Drahtebene bilden, zum Trennen ausgebildet ist und die Orientierungseinrichtung (24) als X-Y-Positioniereinheit ausgebildet ist, mit der der Einkristall in einer Ebene parallel zu der Drahtebene und einer Ebene senkrecht zu der Drahtebene verstellbar ist,
**dadurch gekennzeichnet, dass** eine optische Keilplatte (28), die eine definierte Strahlablenkung bewirkt, mit einem definierten Keilwinkel auf einer zu vermessenden Oberfläche des Einkristalls zum Einstellen eines vorgegebenen Winkeloffsets der X-Y-Orientierung des Einkristalls vorgesehen ist.

4. Vorrichtung nach Anspruch 3, **dadurch gekennzeichnet, dass** eine Winkelmessvorrichtung vorgesehen ist zum Messen der Orientierung einer Stirnfläche (2) des Einkristalls (3) relativ zu der Drahtebene.

5. Vorrichtung nach Anspruch 3 oder 4, **dadurch gekennzeichnet, dass** die Winkelmessvorrichtung einen auf der Stirnfläche (2) des Einkristalls (3) befestigbaren Spiegel (27) und ein Autokollimationsfernrohr (25) aufweist, dessen optische Achse (O) senkrecht auf der Trennebene steht.

6. Vorrichtung nach Anspruch 5, **dadurch gekennzeichnet, dass** der Spiegel (27) mittels einer Vakuumeinrichtung an der Stirnfläche (2) des Einkristalls befestigbar ist.

7. Vorrichtung nach einem der Ansprüche 3 bis 6, **dadurch gekennzeichnet, dass** eine Referenzvorrichtung (32, 25) für die X-Y-Positionierungseinheit vorgesehen ist.

8. Vorrichtung nach einem der Ansprüche 3 bis 7, **dadurch gekennzeichnet, dass** die optische Keilplatte (28) in der Trennebene um die Mittenlängsachse des Einkristalls derart drehbar ist, dass eine bestimmte azimutale Orientierung des Keilwinkels einstellbar ist.

9. Vorrichtung nach einem der Ansprüche 3 bis 8, **dadurch gekennzeichnet, dass** eine Halterung (12) für den Einkristall vorgesehen ist, mit der der Einkristall in der Trennvorrichtung derart positioniert ist, dass ein vorbestimmtes äußeres Merkmal des Einkristalls in einer vorbestimmten um die Mittenlängsachse (M) gedrehten Position orientiert ist.

10. Vorrichtung nach einem der Ansprüche 3 bis 8, **dadurch gekennzeichnet, dass** eine Dreheinrichtung zum Drehen des Einkristalls um seine Mittenlängsachse vorgesehen ist und dass bevorzugt eine Vorrichtung zur Messung der Auslenkung der Trenneinrichtung beim Trennen vorhanden ist, die mit der Dreheinrichtung gekoppelt ist.

11. Vorrichtung nach einem der Ansprüche 3 bis 10, weiter **gekennzeichnet durch** eine Vorrichtung zur Bestimmung der Orientierung einer kristallografischen Ebene relativ zu einer Kristalloberfläche,
mit einer Halterung (11) für den Einkristall (3), mit der der Einkristall (3) so gehalten wird, dass seine zu vermessende Oberfläche (2) freiliegt,
einer Winkelmessvorrichtung (14, 17) zur Messung des Winkels, den die zu vermessende Oberfläche (2) relativ zu einer Bezugsachse der Halterung aufweist und
mit einer röntgenografischen Messeinrichtung (15, 16) zur Bestimmung des Winkels der kristallografischen Ebene relativ zu der Bezugsachse.

12. Vorrichtung nach Anspruch 11, **dadurch gekennzeichnet, dass** der Einkristall (3) im wesentlichen zylindrisch ausgebildet ist und die zu vermessende Oberfläche (2) eine Stirnfläche des Zylinders ist und die Halterung (11) eine ebene Fläche (11a) aufweist, auf die der Einkristall (3) mit seiner der zu vermessenden Oberfläche gegenüberliegenden Stirnfläche fixierbar ist und dass die Bezugsachse die Normale auf die ebene Fläche (11a) ist.

13. Vorrichtung nach Anspruch 11 oder 12, **dadurch gekennzeichnet, dass** die Winkelmessvorrichtung (14, 17) einen auf der zu vermessenden Oberfläche (2) angeordneten Spiegel (17) und ein Autokollimationsfernrohr (14) umfasst, dessen optische Achse (O) mit der Bezugsachse zusammenfällt.

14. Vorrichtung nach einem der Ansprüche 11 bis 13, **dadurch gekennzeichnet, dass** die röntgenografische Messeinrichtung als Röntgengoniometer ausgebildet ist, welches eine Röntgenröhre (15) und einen Detektor (16) umfasst, die in einem Winkelbereich um die Bezugsachse gemeinsam verfahrbar sind zum Messen von Bragg-Reflexen für die kristallografische Ebene.

15. Vorrichtung nach einem der Ansprüche 11 bis 14, **dadurch gekennzeichnet, dass** die Halterung (11) in Richtung der Bezugsachse verfahrbar ist.

16. Vorrichtung nach einem der Ansprüche 11 bis 15, **dadurch gekennzeichnet, dass** die Halterung (11) eine Vakuumansaugvorrichtung zum Fixieren des Einkristalls (3) mittels Unterdruck aufweist.

17. Vorrichtung nach einem der Ansprüche 11 bis 16, **dadurch gekennzeichnet, dass** der Einkristall in der Halterung einen Anschlag (13) aufweist, mit der der Einkristall (3) in einer vorgegebenen Winkelorientierung in einer Ebene senkrecht zur Bezugsachse fixierbar ist.

## Claims

1. Method for cutting a single crystal in a cutting machine in which wafers are cut off from the single crystal by movement of the single crystal in a feed direction (V) relative to a cutting device, with the steps of:
measuring the orientation of the external surface (2) of the single crystal in the cutting machine;
positioning the single crystal on the basis of the orientation of the external surface; and
carrying out the cutting,
**characterized in that**
before the step of measuring the orientation of the external surface (2) of the single crystal, the step of determining the angle between a crystallographic plane and the external surface (2) of the single crystal is performed outside of the cutting machine, and
the step of positioning the single crystal is carried out in such a way that the specific crystallographic plane forms with the feed direction a predetermined angle,
wherein determining the angle that the crystallographic plane forms with an external surface (2) of the single crystal comprises the following steps:
measuring the angle which the crystal surface (2) forms with a reference axis by an autocollimation method,
measuring the angle of the crystallographic plane relative to the reference axis by X-ray goniometry, and
subtracting the measured angles.

2. Method according to claim 1, **characterized in that** the angular position of a given crystallographic direction (K) of the single crystal in the cutting plane is adjusted in such a way that during cutting of the single crystal the forces acting on the cutting device are minimized.

3. Apparatus for carrying out a method of claim 1 or 2 comprising a cutting device (4) for cutting off wafers from an essentially cylindrical single crystal (3) having a longitudinal central axis (M),
an orienting device (24) provided in the apparatus for orienting the single crystal relative to the cutting device and
a feed device (23) for moving the crystal (3) in a feed direction (V) essentially perpendicular to its longitudinal central axis relative to the cutting device, wherein the orienting device (24) is designed in such a way that the single crystal (3) is rotatable about an axis defined by the feed direction and an axis which is perpendicular to the plane which is defined by the longitudinal central axis (M) and the feed direction (V), and wherein the cutting device is defined as a wire saw having a plurality of parallel wires (4) which form a wire plane, for cutting, and
the orienting device (24) is designed as a X-Y-positioning unit with which the single crystal is displaceable in a plane parallel to the wire plane and a plane perpendicular to the wire plane,
**characterized in that** an optical wedge plate (28) which produces a defined beam reflection and which has a given wedge angle is provided on a surface of the single crystal to be measured for adjusting a given angle offset of the X-Y-orientation of the single crystal.

4. Apparatus according to claim 3, **characterized in that** an angle measuring device is provided for measuring the orientation of an end face (2) of the single crystal (3) relative to the wire plane.

5. Apparatus according to claim 3 or 4, **characterized in that** the angle measuring device comprises a mirror (27) which can be fixed to the end face (2) of the single crystal (3), and an autocollimation telescope (25) whose optical axis (O) is perpendicular to the cutting plane.

6. Apparatus according to claim 5, **characterized in that** the mirror (27) can be attached to the end face (2) of the single crystal by means of a vacuum device.

7. Apparatus according to any of claims 3 to 6, **characterized in that** a reference device (32, 25) is provided for the X-Y-positioning unit.

8. Apparatus according to any of claims 3 to 7, **characterized in that** the optical wedge plate (28) is rotatable in the cutting plane about the longitudinal central axis of the single crystal in such a way that a given azimuthal orientation of the wedge angle is adjustable.

9. Apparatus according to any of claims 3 to 8, **characterized in that** a holder (12) is provided for the single crystal, with which the single crystal is positioned in the cutting apparatus in such a way that a predetermined external feature of the single crystal is oriented in a predetermined position rotated about the longitudinal central axis (M).

10. Apparatus according to any of claims 3 to 8, **characterized in that** a rotating device is provided for rotating the single crystal about its longitudinal central axis and **in that** preferably there is a device for measuring the deflection of the cutting device during cutting, which is.coupled to the rotating device.

11. Apparatus according to any of claims 3 to 10, further **characterized by** a device for determining the orientation of a crystallographic plane relative to a crystal surface, the device comprising:
a holder (11) for the single crystal (3) with which the single crystal (3) is held in such a way that its surface (2) to be measured is exposed,
an angle measuring device (14, 17) for measuring the angle which the surface (2) to be measured has relative to a reference axis of the holder, and
an X-ray measuring device (15, 16) for determining the angle of the crystallographic plane relative to the reference axis.

12. Apparatus according to claim 11, **characterized in that** the single crystal (3) is essentially cylindrical and the surface (2) to be measured is an end face of the cylinder, and the holder (11) comprises a plane surface (11a) to which the single crystal (3) can be fixed with its end face opposite the surface to be measured, and **in that** the reference axis is the normal to the plane surface (11a).

13. Apparatus according to claim 11 or 12, **characterized in that** the angle measuring device (14, 17) includes a mirror (17) arranged on the surface (2) to be measured and an autocollimation telescope (14) whose optical axis (O) coincides with the reference axis.

14. Apparatus according to any of claims 11 to 13, **characterized in that** the X-ray measuring device is designed as a X-ray goniometer which includes a X-ray tube (15) and a detector (16) which are movable together within an angular range about the reference axis for measuring Bragg reflections for the crystallographic plane.

15. Apparatus according to any of claims 11 to 14, **characterized in that** the holder (11) is movable in the direction of the reference axis.

16. Apparatus according to any of claims 11 to 15, **characterized in that** the holder (11) comprises a vacuum suction device for fixing the single crystal (3) by means of negative pressure.

17. Apparatus according to any of claims 11 to 16, **characterized in that** the single crystal in the holder comprises a stop (13) with which the single crystal (3) can be fixed in a predetermined angular orientation in a plane perpendicular to the reference axis.

## Revendications

1. Procédé de séparation d'un monocristal dans un dispositif de coupe, dans lequel un découpage de tranches du monocristal est effectuée, par déplacement du monocristal dans une direction d'avancement (V) par rapport à un équipement de coupe, comprenant les étapes consistant à :
mesurer l'orientation de la surface extérieure (2) du monocristal dans le dispositif de coupe ;
positionner le monocristal d'après l'orientation de la surface extérieure, et
effectuer le découpage
**caractérisé en ce que**,
avant l'étape de mesure de l'orientation de la surface extérieure (2) du monocristal, est effectuée l'étape de détermination de l'angle, entre le plan cristallographique et une surface extérieure (2) du monocristal, à l'extérieur du dispositif de coupe, et
l'étape de positionnement du monocristal est effectuée de manière que le plan cristallographique déterminé fasse un angle prédéterminé avec la direction de l'avancement,
la détermination de l'angle entre le plan cristallographique et une surface extérieure (2) du monocristal comprend les étapes suivantes :
mesure de l'angle que fait la surface de cristal (2) avec un axe de référence, au moyen d'un procédé d'autocollimation,
mesure de l'angle du plan cristallographique par rapport à l'axe de référence, par goniométrie aux rayons X, et
formation de la différence des angles mesurés.

2. Procédé selon la revendication 1, **caractérisé en ce que** la position angulaire d'une direction cristallographique (K) déterminée du monocristal dans le plan de coupe est réglée de manière que, lors du découpage du monocristal, les efforts agissant sur le dispositif de coupe soient minimisés.

3. Dispositif pour la mise en oeuvre d'un procédé selon la revendication 1 ou 2, comprenant
Un dispositif de coupe (4) pour le découpage de tranches d'un monocristal (3) de forme sensiblement cylindrique ayant un axe longitudinal médian (M)
un dispositif d'orientation (24), prévu dans le dispositif, afin d'orienter le monocristal par rapport au dispositif de coupe, et
un dispositif d'avancement (23), pour déplacer le cristal (3) dans une direction d'avancement (V), sensiblement perpendiculaire à son plan longitudinal médian par rapport au dispositif de coupe,
le dispositif d'orientation (24) étant réalisé de manière que le monocristal (3) soit susceptible de tourner autour d'un axe défini par le dispositif d'avancement et un axe, perpendiculaire au plan, défini par l'axe longitudinal médian (M) et la direction d'avancement (V), et où
le dispositif de coupe est réalisé sous la forme de scie à fils, comprenant une pluralité de fils (4) parallèles formant un plan de fils, pour effectuer le découpage, et
en ce que le dispositif d'orientation (24) est réalisé sous la forme de dispositif de positionnement X-Y, à l'aide duquel le monocristal est réglable dans un plan parallèle au plan de fils et un plan perpendiculaire au plan de fils
**caractérisé en ce qu'**
est prévue une plaque de coin optique (28), qui provoque une déviation définie du rayon, avec un angle de coin défini sur une surface à mesurer du monocristal, pour régler un offset angulaire prédéterminé de l'orientation X-Y du monocristal.

4. Dispositif selon la revendication 3, **caractérisé en ce qu'**un dispositif de mesure angulaire est prévu, pour mesurer l'orientation d'une face frontale (2) du monocristal (3) par rapport au plan de fils.

5. Dispositif selon la revendication 3 ou 4, **caractérisé en ce que** le dispositif de mesure d'angle présente un miroir (27), susceptible d'être fixé sur la face frontale (2) du monocristal (3), et une lunette d'autocollimation (25), dont l'axe optique (O) est perpendiculaire au plan de découpage.

6. Dispositif selon la revendication 5, **caractérisé en ce que** le miroir (27) est susceptible d'être fixé, au moyen d'un dispositif à vide, sur la face frontale (2) du monocristal.

7. Dispositif selon l'une des revendications 3 à 6, **caractérisé en ce qu'**un dispositif de référence (32, 25) est prévu pour l'unité de positionnement en X-Y.

8. Dispositif selon l'une des revendications 3 à 7, **caractérisé en ce que** la plaque de coin optique (28) est susceptible de tourner dans le plan de découpage, autour de l'axe longitudinal médian du monocristal, de manière qu'une orientation azimutale déterminée de l'angle de coin soit réglable.

9. Dispositif selon l'une des revendications 3 à 8, **caractérisé en ce qu'**une fixation (12) est prévue pour le monocristal, à l'aide duquel le monocristal est positionné dans le dispositif de coupe, de manière qu'une caractéristique extérieure, prédéterminée, du monocristal soit orientée en une position prédéterminée, tournée autour de l'axe longitudinal médian (M).

10. Dispositif selon l'une des revendications 3 à 8, **caractérisé en ce qu'**un dispositif de rotation est prévu pour la rotation du monocristal autour de son axe longitudinal médian, et **en ce que**, de préférence, un dispositif de mesure de la déviation du dispositif de coupe lors du découpage est prévu, couplé au dispositif de rotation.

11. Dispositif selon l'une des revendications 3 à 10, **caractérisé en outre par** un dispositif de détermination de l'orientation d'un plan cristallographique par rapport à une surface de cristal,
avec une fixation (11) pour le monocristal (3), à l'aide de laquelle le monocristal (3) est maintenu de manière que sa surface (2) à mesurer soit libre,
avec un dispositif de mesure angulaire (14, 17), pour la mesure de l'angle que présente la surface (2) à mesurer par rapport à un axe de référence de la fixation, et
avec un dispositif de mesure (15, 16) par radiographie par rayons X, pour la détermination de l'angle du plan cristallographique par rapport à l'axe de référence.

12. Dispositif selon la revendication 11, **caractérisé en ce que** le monocristal (3) est sensiblement cylindrique et **en ce que** la surface (2) à mesurer est une face frontale du cylindre et la fixation (11) présente une surface (11a) sur laquelle le monocristal (3) est susceptible d'être fixé par sa face frontale, opposée à la surface à mesurer, et **en ce que** l'axe de référence est la normale à la surface plane (11a).

13. Dispositif selon la revendication 11 ou 12, **caractérisé en ce que** le dispositif de mesure angulaire (14, 17) comprend un miroir (17), disposé sur la surface (2) à mesurer, et une lunette d'autocollimation (14) dont l'axe optique (O) coïncide avec l'axe de référence.

14. Dispositif selon l'une des revendications 11 à 13, **caractérisé en ce que** le dispositif de mesure par radiographie par rayons X est réalisé sous la forme de goniomètre à rayons X, comprenant un tube à rayons X (15) et un détecteur (16), déplaçables conjointement autour de l'axe de référence dans une plage angulaire, pour mesurer les réflexions de Bragg pour le plan cristallographique.

15. Dispositif selon l'une des revendications 11 à 14, **caractérisé en ce que** la fixation (11) est déplaçable dans la direction de l'axe de référence.

16. Dispositif selon l'une des revendications 11 à 15, **caractérisé en ce que** la fixation (11) présente un dispositif d'aspiration par le vide pour la fixation du monocristal (3) par utilisation d'une pression négative.

17. Dispositif selon l'une des revendications 11 à 16, **caractérisé en ce que** le monocristal présente, dans la fixation, une butée (13), à l'aide de laquelle le monocristal (3) est susceptible d'être fixé sous une orientation angulaire prédéterminée, dans un plan perpendiculaire à l'axe de référence.
